(19) Europäisches Patentamt
European Patent Office
Office européen des brevets

(11) EP 1 340 784 A1

(12) **EUROPEAN PATENT APPLICATION**
published in accordance with Art. 158(3) EPC

(43) Date of publication:
**03.09.2003 Bulletin 2003/36**

(21) Application number: **01978970.0**

(22) Date of filing: **31.10.2001**

(51) Int Cl.[7]: **C08J 5/18**, C08F 10/06
// C08L23:12

(86) International application number:
**PCT/JP01/09546**

(87) International publication number:
**WO 02/038654 (16.05.2002 Gazette 2002/20)**

(84) Designated Contracting States:
**AT BE CH CY DE DK ES FI FR GB GR IE IT LI LU MC NL PT SE TR**

(30) Priority: **10.11.2000 JP 2000343866**
**10.11.2000 JP 2000343867**

(71) Applicant: **IDEMITSU PETROCHEMICAL CO., LTD.**
**Tokyo 130-0015 (JP)**

(72) Inventors:
- **KIJIMA, Masato**
  **Ichihara-shi, Chiba 299-0107 (JP)**
- **ENDOH, Masahiko**
  **Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(54) **SURFACE-PROTECTING FILM/SHEET AND DECORATIVE FILM/SHEET, AND DECORATIVE MATERIAL**

(57) A surface-protecting film-sheet comprises at least one layer comprising a resin composition comprising 1 to 99% by mass of propylene resin [I] having (1) a fraction of a meso pentad (mmmm) of 0.2 to 0.6 and (2) [a fraction of a racemi pentad (rrrr)/(1-mmmm)]≦0.1 and 99 to 1% by mass of olefin-based resin [II]. The film-sheet exhibits excellent shape-following and surface-protecting properties, causes no problems in disposal due to the absence of toxic gases during incineration and can replace conventional film-sheets of flexible polyvinyl chloride-based resins. A decorative film-sheet has a laminate structure of surface layer/adhesive layer/picture layer/adhesive layer/substrate or surface layer/adhesive layer/picture layer and the surface layer and/or the substrate comprises a film-sheet comprising the above resin composition. The decorative film-sheet exhibits excellent transparency of the surface layer and workability in V-cutting and lapping and causes no problems in disposal.

EP 1 340 784 A1

## Description

### TECHNICAL FIELD

The present invention relates to a surface-protecting film-sheet and, more particularly, to a surface-protecting film-sheet which exhibits stress relaxation, flexibility and strength which are the same as or greater than those of surface-protecting film-sheets made of flexible vinyl chloride-based resins, has an excellent shape-following property, causes no problems in disposal since no toxic gases are generated during incineration, exhibits an excellent effect of surface protection and can replace conventional film-sheets of flexible polyvinyl chloride-based resins.

The present invention also relates to a decorative film-sheet and a decorative material and, more particularly, to a laminated decorative film-sheet which exhibits excellent transparency of the surface layer and workability in bending, V-cutting and lapping and causes no problems in disposal since no toxic gases are generated during incineration and a decorative material using the decorative film-sheet.

### BACKGROUND ART

Metal plates such as stainless steel plates, synthetic resin plates and decorative plywoods are, in general, coated with a flexible film or sheet as the surface-protecting material so that scratches and stains on the surface during transportation and working are prevented. For the surface-protecting films and sheets used for these applications, in general, surface hardness and wear resistance are required. For materials subjected to bending and deep drawing such as metal plates, the shape-following property, i.e., excellent flexibility, uniform elongation and tensile strength, are also required so that the coating film is not cleaved or fractured during the working.

Heretofore, flexible vinyl chloride-based resins are used as substrate of the surface-protecting films and sheets. However, the flexible vinyl chloride-based resins have problems such as staining of the coated substrates due to bleeding of plasticizers contained in a great amount and environmental pollution due to generation of chlorine gas during incineration after disposal although these resins have no problems on the flexibility, strength and the shape-following property.

As the material to replace the flexible vinyl chloride-based resins, polyolefin-based resins such as linear low density polyethylene resins and polypropylene resins have been examined recently (for example, Japanese Patent Application Laid-Open Nos. Heisei 7(1995)-90091 and Heisei 8(1996)-27445). In the surface-protecting film described in Japanese Patent Application Laid-Open No. Heisei 8(1996)-27445, a propylene-based copolymer obtained by copolymerization in accordance with the reactor blending is used. The copolymer has a degree of crystallization as great as 40 to 60% and the flexibility is insufficient. The surface-protecting adhesive sheet using a flexible polypropylene-based resin (Japanese Patent Application Laid-Open No. Heisei 7(1995)-90091) cannot satisfy both of the flexibility and the scratch resistance.

Heretofore, as the surface-decorative boards for furnitures and kitchen products, in general, materials having a structure in which a decorative film-sheet printed with a wood pattern or the like is laminated to a substrate made of a wood-based material with an adhesive are used.

For the decorative film-sheets used for the surface-decorative boards, in general, the following properties are required: (i) workability in lapping, i.e., the property enabling lamination by following the shape of a substrate when the substrate has a shape having protrusions and depressions or a complicated shape, and (ii) workability in V-cutting, i.e., the property suitable for applying V-cutting to a surface-decorative board after lamination so that constructing a box or folding end portions are facilitated. Specifically, it is required that troubles such as formation of cracks, cutting and whitening are not formed at folded portions of a decorative film-sheet.

To provide the workability in V-cutting and lapping to a decorative film-sheet, heretofore, film-sheets made of vinyl chloride-based resins have been used. However, the film-sheets made of vinyl chloride-based resins have problems in that the vinyl chloride-based resins have poor weatherability and resistance to staining, a great thickness is required for the film-sheets to provide a sufficient strength in V-cutting, and difficulty arises in disposal due to generation of chlorine gas during incineration. Therefore, decorative film-sheets using polyolefin-based resins have been developed as the film-sheets to replace those of vinyl chloride-based resins. For example, in Japanese Patent Application Laid-Open No. Heisei 7(1995)-24979, a polypropylene-based resin and a polyester-based resin are used. However, the film-sheet which can be used for the substrate sheet is limited to films of polyolefin-based resins which are not transparent.

The present invention has an object of providing a surface-protecting film-sheet which exhibits stress relaxation, flexibility and strength which are the same as or greater than those of surface-protecting film-sheets made of flexible vinyl chloride-based resins, has an excellent shape-forming property, causes no problems in disposal, exhibits excellent effect of surface protection and can replace conventional film-sheets of flexible polyvinyl chloride-based resins.

The present invention has another object of providing a decorative film-sheet which exhibits excellent transparency of the surface layer and excellent workability in bending, V-cutting and lapping and causes no problems in disposal since no toxic gases are generated during incineration and a decorative material using the decorative film-sheet such as a decorative wood material, a decorative steel plate and a decorative inorganic material.

DISCLOSURE OF THE INVENTION

As the result of extensive studies by the present inventors to achieve the above objects, it was found that the objects could be achieved by using a surface-protecting film-sheet having at least one layer comprising a resin composition which comprised a specific propylene polymer and an olefin-based resin.

It was found that the objects could be achieved also by using a film or a sheet which comprised a specific propylene polymer and an olefin-based resin as the surface layer or the substrate in a decorative film-sheet having a laminate structure having a surface layer, an adhesive layer, a picture layer, an adhesive layer and a substrate or a laminate structure having a surface layer, an adhesive layer and a picture layer.

The present invention has been completed based on the above knowledge.

The present invention provides a surface-protecting film-sheet which comprises at least one layer comprising a resin composition which comprises 1 to 99% by mass of propylene resin [I] satisfying following conditions (1) and (2):

(1) a fraction of a meso pentad (mmmm) is in a range of 0.2 to 0.6
(2) a fraction of a racemi pentad (rrrr) and a value of (1-mmmm) satisfy a relation:

$$[rrrr/(1\text{-}mmmm)] \leqq 0.1$$

and 99 to 1% by mass of olefin-based resin [II].

The present invention also provides a decorative film-sheet having a laminate structure comprising a surface layer, an adhesive layer, a picture layer, an adhesive layer and a substrate or a laminate structure comprising a surface layer, an adhesive layer and a picture layer, wherein a film or a sheet comprising a resin composition which comprises 1 to 99% by mass of propylene resin [I] satisfying following conditions (1) and (2):

(1) a fraction of a meso pentad (mmmm) is in a range of 0.2 to 0.6
(2) a fraction of a racemi pentad (rrrr) and a value of (1-mmmm) satisfy a relation:

$$[rrrr/(1\text{-}mmmm)] \leqq 0.1$$

and 99 to 1% by mass of olefin-based resin [II] is used for at least one of the surface layer and the substrate.

The present invention further provides a decorative wood material, a decorative metal material and a decorative inorganic material which are obtained by adhering the above decorative film-sheet to a wood substrate, a metal substrate and an inorganic substrate, respectively.

THE MOST PREFERRED EMBODIMENT TO CARRY OUT THE INVENTION

The specific propylene polymer [I] used for the resin composition forming the surface-protecting film-sheet and the decorative film-sheet of the present invention satisfies the following conditions (1) and (2):

(1) a fraction of a meso pentad (mmmm) is in the range of 0.2 to 0.6 and
(2) a fraction of a racemi pentad (rrrr) and a value of (1-mmmm) satisfy the following relation:

$$[rrrr/(1\text{-}mmmm)] \leqq 0.1.$$

It is necessary that the propylene polymer in the present invention satisfies the above conditions. It is preferable that the fraction of the meso pentad (mmmm) is in the range of 0.3 to 0.6 and more preferably in the range of 0.4 to 0.5. It is preferable that the fraction of the racemi pantad (rrrr) and the value of (1-mmmm) satisfy the relation:

$$[rrrr/(1\text{-}mmmm)] \leqq 0.08,$$

more preferably, the relation:

$$[rrrr/(1\text{-}mmmm)] \leqq 0.06,$$

and, most preferably, the relation:

$$[rrrr/(1\text{-}mmmm)] \leqq 0.05.$$

When propylene polymer [I] satisfies the above relations, the obtained resin composition exhibits excellent balance between the amount of the tacky components, the low modulus and the transparency. In other words, advantages are exhibited in that softness (flexibility) is excellent due to the small modulus, the surface properties are excellent (for example, bleeding and transfer of tacky components to other products are suppressed) due to small amounts of tacky components, and transparency is excellent.

When the fraction of the meso pentad (mmmm) of the propylene polymer is smaller than 0.2, tackiness arises. When the fraction of the meso pentad exceeds 0.6, modulus is excessively great. Therefore, a fraction of the meso pentad outside the above range is not preferable. When the value of [rrrr/(1-mmmm)] exceeds 0.1, tackiness arises.

The fraction of the meso pentad (mmmm) is the fraction of the meso configuration as the pentad unit in a polypropylene molecular chain, which is obtained by the measurement of the signal of methyl group in the $^{13}$C-NMR spectrum in accordance with the method proposed by A. Zambelli et al. (Macromolecules, 6, 925 (1973)). An increase in the fraction of the meso pentad means an increase in the stereoregularity. The fraction of the racemi pentad (rrrr) is the fraction of the racemi configuration as the pentad unit in the polypropylene molecular chain. The value of [rrrr/(1-mmmm)] is obtained from the above fractions of the pentads and is a value expressing the uniformity of the distribution of the stereoregularity in the propylene polymer. An increase in this value means widening in the distribution of the stereoregularity, which means an increase in tackiness and a decrease in transparency due to formation of a mixture of highly stereoregular polypropylene and amorphous polypropylene which is similar to conventional polypropylene produced by using a conventional catalyst system. In accordance with the assignment of peaks proposed by A. Zambelli in Macromolecules, 8, 687 (1975), the measurement of the $^{13}$C-NMR spectrum is conducted using the following apparatus in the conditions also shown in the following:

Apparatus: manufactured by JEOL Ltd.;
JNM-EX400 type $^{13}$C-NMR apparatus
Method: complete decoupling of proton
Concentration: 220 mg/ml
Solvent: a mixed solvent of 1,2,4-trichlorobenzene and deuterated benzene in a ratio of amounts by volume of 90:10
Temperature: 130°C
Pulse width: 45°
Repeating time of pulse: 4 seconds
Accumulation of measurements: 10,000 times

It is preferable that propylene polymer [I] in the present invention has (3) an intrinsic viscosity [η] in the range of 1.0 to 3.0 dl/g, more preferably in the range of 1.0 to 2.5 dl/g and most preferably in the range of 1.1 to 2.2 dl/g as measured in tetraline at 135°C. When the intrinsic viscosity [η] is smaller than 1.0 dl/g, there is the possibility that stickiness arises. When the intrinsic viscosity [η] exceeds 3.0 dl/g, there is the possibility that molding property deteriorates due to a decrease in fluidity.

It is preferable that, in addition to the requirements of (1), (2) and (3) described above, the propylene polymer [I] in the present invention has (4) an amount of a component (W25) which is eluted at a temperature of 25°C or lower in chromatography under elevation of the temperature in the range of 20 to 100% by mass, more preferably in the range of 30 to 100% by mass, still more preferably in the range of 50 to 100% by mass and most preferably in the range of 60 to 100% by mass. W25 is the amount (% by mass) of components which are eluted without being adsorbed with an adsorbent packed into a TREF column at the temperature of 25°C in the elution curve obtained by the measurement in accordance with the chromatography under elevation of the temperature. The procedures of the operations,

the construction of the apparatus and the conditions of the measurement will be shown in an Example. W25 is an index showing flexibility of the propylene polymer. In the present invention, when W25 is smaller than 20%, there is the possibility that flexibility is lost.

It is preferable that propylene polymer [I] in the present invention further satisfies one of the following conditions (i) to (iv).

(i) The molecular weight distribution (Mw/Mn) as measured in accordance with the gel permeation chromatography (GPC) is 4 or smaller, more preferably 3.5 or smaller and most preferably 3 or smaller. When the molecular weight distribution (Mw/Mn) exceeds 4, there is the possibility that stickiness arises. Mw/Mn is obtained in accordance with the gel permeation chromatography (GPC) as described in an Example.
(ii) It is preferable that the absorbed heat of fusion $\Delta H$ as measured in accordance with DSC is 30 J/g or smaller due to excellent flexibility. $\Delta H$ is an index showing flexibility. The greater this value, the greater the modulus and the smaller the flexibility.
(iii) It is preferable that the melting point (Tm) and the temperature of crystallization (Tc) are absent or low although the presence or the absence of Tm and Tc is not an essential condition. It is more preferable that Tm is 100°C or lower. $\Delta H$, Tm and Tc are obtained in accordance with DSC as described in an Example.
(iv) It is preferable that tensile modulus is 100 MPa or smaller and more preferably 70 MPa or smaller.

As propylene polymer [I] used in the present invention, any propylene polymer can be used as long as conditions (1) and (2) described above are satisfied. Comonomers other than propylene may be copolymerized in an amount of 2% by mass or smaller as long as the objects of the present invention are not adversely affected. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene and 1-eicosene. In the present invention, the comonomer may be used singly or in combination of two or more.

As the process for producing propylene polymer [I] used in the present invention, it is preferable that propylene is polymerized or copolymerized in the presence of a metallocene catalyst which is obtained by combination of (A) a transition metal compound having a bridged structure formed through two bridging groups and (B) a cocatalyst. As a specific example of the process, propylene is polymerized or copolymerized in the presence of a polymerization catalyst which comprises:

(A) a transition metal compound represented by the following general formula (I):

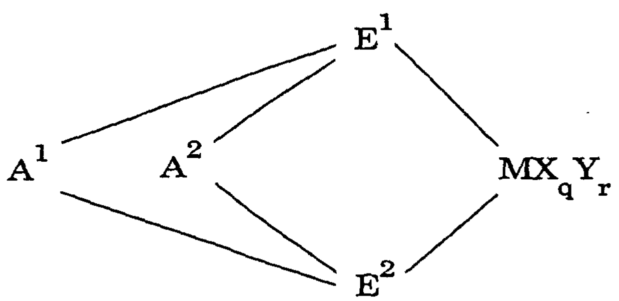

··· (I)

wherein M represents a metal element of the Groups 3 to 10 or the Lanthanoid series of the Periodic Table; $E^1$ and $E^2$ each represent a ligand selected from substituted cyclopentadienyl groups, indenyl group, substituted indenyl groups, heterocyclopentadienyl groups, substituted heterocyclopentadienyl groups, amide group, phosphide group, hydrocarbon groups and groups having silicon atom, form a bridged structure through groups represented by $A^1$ and $A^2$ and may represent the same group or different groups; X represents a ligand bonded through a σ-bond and a plurality of X may represent the same ligand or different ligands and may form a bridged structure with groups represented by other X, $E^1$, $E^2$ or Y when a plurality of X are present; Y represents a Lewis base and a plurality of Y may represent the same base or different bases and may form a bridged structure with groups represented by other Y, $E^1$, $E^2$ or X when a plurality of Y are present; $A^1$ and $A^2$ each represent a divalent bridging group bonding two ligands, which is a hydrocarbon group having 1 to 20 carbon atoms, a hydrocarbon group having 1 to 20 carbon atoms and halogen atoms, a group having silicon atom, a group having germanium atom, a group having tin atom, -O-, -CO-, -S-, $-SO_2-$, -Se-, $-NR^1-$, $-PR^1-$, $-P(O)R^1-$, $-BR^1-$ or $-AlR^1-$, $R^1$ representing hydrogen atom, a halogen atom, a hydrocarbon group having 1 to 20 carbon atoms or a hydrocarbon group having

1 to 20 carbon atoms and halogen atoms, and a plurality of $A^1$ and $A^2$ may represent the same group or different groups; q represents an integer of 1 to 5 which expresses [(the valence of M)-2]; and r represents an integer of 0 to 3; and

(B) a cocatalyst component selected from (B-1) compounds which can form an ionic complex by the reaction with the transition metal compound of component (A) or a derivative thereof and (B-2) aluminoxanes.

Examples of the transition metal compound represented by general formula (I) include (1,2'-dimethylsilylene)(2,1'-dimethylsilylene)bis(3-n-butylindenyl) zirconium dichloride, (1,2'-dimethylsilylene)(2,1'-dimethylsilylene)bis(3-trimethylsilylmethylindenyl)zirconium dichloride, (1,2'-dimethylsilylene)(2,1'-dimethylsilylene)bis(3-phenylindenyl)-zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,1'-dimethylsilylene)bis(5,6-dimethylindenyl)zirconium dichloride, (1,2'-dimethylsilylene)(2,1'-dimethylsilylene)bis(4,7-di-i-propylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-i-propylindenyl)-zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)bis(indenyl)zirconium dichloride, (1,2'-dimethylsilylene)-(2,1'-isopropylidene)bis(3-methylindenyl)zirconium dichloride, (1,2'-dimethylsilylene)(2,1'-isopropylidene)bis(3-i-propylindenyl)zirconium dichloride, (1,2'-dimethylsilylene)(2,1'-isopropylidene)bis(3-n-butylindenyl)zirconium dichloride, (1,2'-dimethylsilylene)(2,1'-isopropylidene)bis(3-trimethylsilylmethylindenyl)zirconium dichloride and compounds obtained by substituting zirconium in these compounds with titanium or hafnium.

Examples of component (B-1) used as component (B) include triethylammonium tetraphenylborate, tri-n-butylammonium tetraphenylborate, trimethylammonium tetraphenylborate, tetraethylammonium tetraphenylborate, methyl (tri-n-butyl)ammonium tetraphenylborate and benzyl(tri-n-butyl)ammonium tetraphenylborate. The compound of component (B-1) may be used singly or in combination of two or more.

Examples of the aluminoxane of component (B-2) include methylaluminoxane, ethylaluminoxane and isobutylaluminoxane. The aluminoxane may be used singly or in combination of two or more.

For the polymerization catalyst, an organoaluminum compound may be used as component (C) in addition to component (A) and component (B).

Examples of the organoaluminum compound of component (C) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride and ethylaluminum sesquichloride.

The organoaluminum compound may be used singly or in combination of two or more.

In the polymerization of propylene, at least one of the catalyst components may be used in the form supported with a support.

The process for the polymerization is not particularly limited and any of the slurry polymerization, the gas phase polymerization, the bulk polymerization, the solution polymerization and the suspension polymerization can be used. The bulk polymerization and the solution polymerization are preferable.

It is preferable that the temperature of the polymerization is in the range of -100 to 250°C and, as the amount of the catalyst relative to the amount of the material used for the polymerization, the ratio of the amounts by mole of the monomer of the raw material to the above component (A) is in the range of 1 to $10^8$ and more preferably in the range of 100 to $10^5$. The time of polymerization is, in general, in the range of 5 minutes to 10 hours and the pressure of polymerization is, in general, in the range of the atmospheric pressure to 20 MPa (gauge).

Examples of olefin-based resin [II] used in the present invention include polypropylene resins, propylene-ethylene copolymers, propylene-ethylene-diene copolymers, polyethylene, ethylene/$\alpha$-olefin copolymers, ethylene-vinyl acetate copolymers, hydrogenated styrene-based elastomers and modified polyolefins. The olefin-based resin may be used singly or in combination of two or more. Resin compositions comprising these olefin-based resins and thermoplastic elastomers can also be used. In the present invention, polypropylene resins are preferable.

Examples of the modified polyolefin include products of chemical modification of polyolefins such as polyethylene, polypropylene, ethylene-$\alpha$-olefin copolymers, ethylene-$\alpha$-olefin-non conjugated diene compound copolymers (for example, EPDM) and ethylene-aromatic monovinyl compound-conjugate diene compound copolymer rubber with unsaturated carboxylic acids such as acrylic acid, methacrylic acid and maleic acid, anhydrides of unsaturated carboxylic acids such as maleic anhydride, esters of unsaturated carboxylic acids such as methyl acrylate and monomethyl maleate, amides of unsaturated carboxylic acids such as acrylamide and maleic acid monoamide or imides of unsaturated carboxylic acids such as maleimide and N-butylmaleimide.

Examples of the process for the chemical modification include the process of reacting the polyolefin with the unsaturated carboxylic acid or the derivative thereof described above in a suitable solvent using an agent generating radicals such as benzoyl peroxide.

The resin composition used in the present invention comprises 1 to 99% by mass of propylene resin [I] and 99 to 1% by mass of olefin-based resin [II], preferably 10 to 80% by mass of propylene resin [I] and 90 to 20% by mass of olefin-based resin [II], more preferably 25 to 75% by mass of propylene resin [I] and 75 to 25% by mass of olefin-based resin [II] and most preferably 40 to 75% by mass of propylene resin [I] and 60 to 25% by mass of olefin-based resin [II].

(Process for producing the resin composition)

The resin composition used in the present invention may be produced by dry blending 1 to 99% by mass of propylene polymer [I] described above, 99 to 1% by weight of olefin-based resin [II] described above and various additives which are used where desired using a Henschel mixer, followed by mixing with melting using a single screw extruder, a twin screw extruder or a Banbury mixer. The resin composition may also be produced by adding various additives to propylene polymer [I] and/or olefin-based resin [II], followed by blending and mixing the components with melting. The resin composition may also be produced using a master batch. Examples of the additives used where desired include various types of stabilizers, softeners, inorganic fillers, organic fillers, pigments, foaming agents, flame retardants and nucleating agents.

As the various types of stabilizers, in general, stabilizers against oxidation and stabilizers against heat degradation are used. Examples of the stabilizer include phenol-based stabilizers, organic phosphite-based stabilizers, thioether-based stabilizers and hindered amine-based stabilizers.

As the phenol-based stabilizer, conventional phenol-based stabilizers can be used. Examples of the phenol-based stabilizer include 2,6-di-t-butyl-4-methylphenol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-2-ethyl-6-t-octylphenol, 2-isobutyl-4-ethyl-5-t-hexylphenol, 2-cyclohexy-4-n-butyl-6-isopropylphenol, mixed cresols modified with styrene, dl-α-tocopherol, t-butylhydroquinone, 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis [6-(1-methylcyclohexyl)-p-cresol], 2,2'-ethylidenebis(4,6-di-t-butylphenol), 2,2'-butylidenebis(2-t-butyl-4-methylphenol), 1,1,3-tris(2-methyl-4-hydroxy-5-t-butylphenyl)butane, triethylene glycol bis[3-(3-t-butyl-5-methyl-4-hydroxyphenyl)propionate], 1,6-hexanediol bis[3-(3,5-di-t-butyl-4-hydroxyphenyl)propionate], 2,2'-thiodiethylene bis[3-(3,5-di-t-butyl-4-hydroxyphenyl)propionate], N,N'-hexamethylene bis(3,5-di-t-butyl-4-hydroxyhydroxycinnamide), 3,5-di-t-butyl-4-hydroxylbenzylphosphonate diethyl ester, 1,3,5-tris(2,6-dimethyl-3-hydroxy-4-t-butylbenzyl) isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, 2,4-bis(n-octylthio)-6-(4-hydroxy-3,5-di-t-butylanilino)-1,3,5-triazine, tetrakis[methylene-3-(3,5-di-t-butyl-4-hydroxyphenyl) propionate]methane, bis(ethyl 3,5-di-t-butyl-4-hydroxybenzylphosphonate) calcium, bis(ethyl 3,5-di-t-butyl-4-hydroxybenzylphosphonate) nickel, bis[3,3-bis(3-t-butyl-4-hydroxyphenyl)butyric acid] glycol ester, N, N'-bis[3-(3,5-di-t-butyl-4-hydroxyphenyl)propionyl]hydrazine, 2,2'-oxamidobis[ethyl-3-(3,5-di-t-butyl-4-hydroxyphenyl) propionate], bis[2-t-butyl-4-methyl-6-(3-t-butyl-5-methyl-2-hydroxybenzyl)phenyl] terephthalate, 1,3,5-trimethyl-2,4,6-tris(3,5-di-t-butyl-4-hydroxybenzyl)benzene, 3,9-bis[1,1-dimethyl-2-[β-(3-t-butyl-4-hydroxy-5-methylphenyl)propionyloxy]ethyl-2,4,8,10-tetraoxaspiro[5,5]undecane, 2,2-bis[4-[2-(3,5-di-t-butyl-4-hydroxyhydroxy-cinnamoyloxy)] ethoxyphenyl]propane and alkyl esters of β-(3,5-di-t-butyl-4-hydroxyphenyl)propionic acid such as stearyl β-(4-hydroxy-3,5-di-t-butylphenol)propionate. Among these compounds, 2,6-di-t-butyl-4-methylphenol, stearyl β-(4-hydroxy-3,5-di-t-butylphenol)propionate, 2,2'-ethylidenebis(4,6-di-t-butylphenol) and tetrakis[methylene-3-(3,5-di-t-butyl-4-hydroxyphenyl) propionate are preferable.

Examples of the organic phosphite-based stabilizer include trioctyl phosphite, trilauryl phosphite, tristridecyl phosphite, trisisodecyl phosphite, phenyl diisooctyl phosphite, phenyl diisodecyl phosphite, phenyl di(tridecyl) phosphite, diphenyl isooctyl phosphite, diphenyl isodecyl phosphite, diphenyl tridecyl phosphite, triphenyl phosphite, tris (nonylphenyl) phosphite, tris(2,4-di-t-butylphenyl) phosphite, tris(butoxyethyl) phosphite, tetratridecyl-4,4'-butylidenebis(3-methyl-6-t-butylphenyl)diphosphite, 4,4'-isopropylidenediphenol alkyl phosphite (the alkyl group having about 12 to 15 carbon atoms), 4,4'-isopropylidenebis(2-t-butylphenol) di(nonylphenyl) phosphite, tris(biphenyl) phosphite, tetra (tridecyl)-1,1,3-tris(2-methyl-5-t-butyl-4-hydroxyphenyl)butane diphosphite, tris(3,5-di-t-butyl-4-hydroxyphenyl) phosphite, hydrogenated 4,4'-isopropylidenediphenol polyphosphite, bis(octylphenyl) bis[4,4'-butylidenebis(3-methyl-6-t-butylphenyl)] 1,6-hexanediol diphosphite, hexatridecyl-1,1,3-tris(2-methyl-4-hydroxy-5-t-butylphenol) diphosphite, tris [4,4'-isopropylidenebis(2-t-butylphenol)] phosphite, tris(1,3-distearoyloxyisopropyl) phosphite, 9,10-dihydro-9-phosphaphenanthrene-10-oxide, tetrakis(2,4-di-t-butylphenyl)-4,4'-biphenylene diphosphonite, distearyl pentaerythritol diphosphite, di(nonylphenyl) pentaerythritol diphosphite, phenyl 4,4'-isopropylidenediphenol pentaerythritol diphosphite, bis(2,4-di-t-butylphenyl) pentaerythritol diphosphite, bis(2,6-di-t-butyl-4-methylphenyl) pentaerythritol diphosphite and phenyl bisphenol A pentaerythritol diphosphite.

Among these compounds, tris(2,4-di-t-butylphenyl) phosphite, tris(nonylphenyl) phosphite and tetrakis(2,4-di-t-butylphenyl)-4,4'-biphenylene diphosphite are preferable and tris(2,4-di-t-butylphenyl) phosphite is more preferable.

As the organic thioether-based stabilizer, dialkyl thiodipropionates and esters of alkylthiopropionic acids with polyhydric alcohols are preferable. As the dialkyl thiodipropionate used above, dialkyl thiodipropionates having an alkyl group having 6 to 20 carbon atoms are preferable. As the ester of an alkylthiopropionic acid with a polyhydric alcohol, esters of alkylthiopropionic acids having an alkyl group having 4 to 20 carbon atoms with polyhydric alcohols are preferable. Examples of the polyhydric alcohol constituting the ester of the polyhydric alcohol include glycerol, trimethylolethane, trimethylolpropane, pentaerythritol and trishydroxyethyl isocyanurate.

Examples of the dialkyl thiodipropionate include dilauryl thiodipropionate, dimyristyl thiodipropionate and distearyl thiodipropionate. Examples of the ester of an alkylthiopropionic acid with a polyhydric alcohol include glycerol tributyl thiopropionate, glycerol trioctyl thiopropionate, glycerol trilauryl thiopropionate, glycerol tristearyl thiopropionate, trimethylolethane tributyl thiopropionate, trimethylol-ethane trioctyl thiopropionate, trimethylolethane trilauryl thiopropionate, trimethylolethane tristearyl thiopropionate, pentaerythritol tetrabutyl thiopropionate, pentaerythritol tetraoctyl thiopropionate, pentaerythritol tetralauryl thiopropionate and pentaerythritol tetrastearyl thiopropionate. Among these compounds, dilauryl thiodipropionate, distearyl thiodipropionate and pentaerythritol tetralauryl thiopropionate are preferable.

Examples of the hindered amine-based stabilizer include bis(2,2,6,6-tetramethyl-4-piperidyl) sebacate, polycondensation products of dimethyl succinate and 1-(2-hydroxyethyl)-4-hydroxy-2,2,6,6-tetramethyl-piperidine, poly [6-(1,1,3,3-tetramethylbutyl)imino-1,3,5-triazine-2,4-diyl][(2,2,6,6-tetramethyl-4-piperidiyl)imino]hexamethylene [2,2,6,6-tetramethyl-4-piperidyl]imide], tetrakis(2,2,6,6-tetramethyl-4-piperidyl) 1,2,3,4-butanetetracarboxylate, 2,2,6,6-tetramethyl-4-piperidyl benzoate, bis(1,2,6,6-pentamethyl-4-piperidyl)-2-(3,5-di-t-butyl-4-hydroxybenzyl)-2-n-butyl malonate, bis(N-methyl-2,2,6,6-tetramethyl-4-piperidyl) sebacate, 1,1'-(1,2-ethanediyl)bis(3,3,5,5-tetramethylpiperadinone), (mixed 2,2,6,6-tetramethyl-4-piperidyl/tridecyl)-1,2,3,4-butanetetracarboxylate, (mixed 1,2,2,6-6-pentamethyl-4-piperidyl/tridecyl)- 1,2,3,4-butanetetracarboxylate, mixed [2,2,6,6-tetramethyl-4-piperidyl/β,β,β',β'-tetramethyl-3,9-[2,4,8,10-tetraoxaspiro(5,5)undecane]diethyl]-1,2,3,4-butanetetracarboxylate, mixed [1,2,2,6,6-pentamethyl-4-piperidyl/β,β,β',β'-tetramethyl-3,9-[2,4,8,10-tetraoxaspiro(5,5)undecane]diethyl]-1,2,3,4-butanetetracarboxylate, condensation products of N,N'-bis(3-aminopropyl)ethylenediamine-2,4-bis[N-butyl-N-(1,2,2,6,6-pentamethyl-4-piperidyl)amino]-6-chloro-1,3,5-triazine, poly[6-N-morpholyl-1,3,5-triazine-2,4-diyl][(2,2,6,6-tetramethyl-4-piperidyl)imino] hexamethylene[(2,2,6,6-tetramethyl-4-piperidyl)imide], condensation products of N,N'-bis(2,2,6,6-tetramethyl-4-piperidyl)hexamethylenediamine and 1,2-dibromoethane and [N-(2,2,6,6-tetramethyl-4-piperidyl)-2-methyl-2-(2,2,6,6-tetramethyl-4-piperidyl)-imino]propionamide.

Among the hindered amine-based stabilizers, polycondensation products of dimethyl succinate and 1-(2-hydroxyethyl)-4-hydroxy-2,2,6,6-tetramethylpiperidine, poly[6-(1,1,3,3-tetramethylbutyl)imino-1,3,5-triazine-2,4-diyl][(2,2,6,6-tetramethyl-4-piperidyl)imino]hexamethylene [2,2,6,6-tetramethyl-4-piperidyl]imide], tetrakis(2,2,6,6-tetramethyl-4-piperidyl)-1,2,3,4-butanetetracarboxylate, bis(1,2,6,6-pentamethyl-4-piperidyl)-2-(3,5-di-t-butyl-4-hydroxybenzyl) 2-n-butyl malonate, 1,1'-(1,2-ethanediyl)bis(3,3,5,5-tetramethylpiperadinone), (mixed 2,2,6,6-tetramethyl-4-piperidyl/tridecyl)-1,2,3,4-butanetetracarboxylate, (mixed 1,2,2,6,6-pentamethyl-4-piperidyl/tridecyl)-1,2,3,4-butanetetracarboxylate, mixed [2,2,6,6-tetramethyl-4-piperidyl/β,β,β',β'-tetramethyl-3,9-[2,4,8,10-tetraoxaspiro(5,5)undecane] diethyl]-1,2,3,4-butanetetracarboxylate, mixed [1,2,2,6,6-pentamethyl-4-piperidyl/β,β,β',β'-tetramethyl-3,9-[2,4,8,10-tetraoxaspiro(5,5)undecane]diethyl]-1,2,3,4-butanetetracarboxylate, condensation products of N,N'-bis(3-aminopropyl)ethylenediamine-2,4-bis[N-butyl-N-(1,2,6,6-pentamethyl-4-piperidyl)amino]-6-chloro-1,3,5-t riazine, poly[6-N-morpholyl-1,3,5-triazine-2,4-diyl][(2,2,6,6-tetramethyl-4-piperidyl)imino]hexamethylene[(2,2,6,6-tetramethyl-4-piperidyl) imide], condensation products of N,N'-bis(2,2,6,6-tetramethyl-4-piperidyl)-hexamethylenediamine and 1,2-dibromoethane and [N-(2,2,6,6-tetramethyl-4-piperidyl)-2-methyl-2-(2,2,6,6-tetramethyl-4-piperidyl)-imino]propionamide are preferable.

As the softener, process oils are preferable. As the process oil, process oils conventionally used as the softener in processing synthetic rubber can be used without additional treatments. Any of mineral oils and synthetic oils can be used as the process oil. Examples of the mineral oil include distilled oils obtained by atmospheric distillation of paraffinic crude oils, intermediate crude oils and naphthenic crude oils, distilled oils obtained by vacuum distillation of residual oils of the atmospheric distillation and purified oils obtained by purifying the above oils in accordance with a conventional process and oils treated by deep dewaxing. Examples of the synthetic oil include alkylbenzenes, polybutene and poly (α-olefins).

The properties required for the process oil applied to the present invention are not particularly limited. Process oils having a kinematic viscosity at 40°C in the range of 100 to 10,000 $mm^2$/sec are preferable and process oils having a kinematic viscosity in the range of 200 to 7,000 $mm^2$/sec are more preferable.

Examples of the inorganic filler include spherical fillers, plate-shaped fillers and fiber-shaped fillers. Examples of the spherical filler include calcium carbonate, kaolin (aluminum silicate), silica, perlite, shirasu balloon, sericite, diatomaceous earth, calcium sulfite, calcined alumina, calcium silicate, crystalline zeolite and amorphous zeolite. Examples of the plate-shaped filler include talc and mica. Examples of the fiber-shaped filler include fillers having a needle

shape such as wollastonite, fillers having a fiber shape such as magnesium oxysulfate, potassium titanate fibers and calcium carbonate having a fiber shape and fillers having a complete fiber shape such as glass fibers.

Examples of the organic filler include powder of wood materials such as wood powder and cotton powder, powder of rice hulls, powder of crosslinked rubbers, powder of plastics and collagen powder.

Examples of the flame retardant include hydrated aluminum, hydrated gypsum, zinc borate, barium borate, borax, kaolin, clay, calcium carbonate, alunite, basic magnesium carbonate, calcium hydroxide and magnesium hydroxide.

In the decorative film-sheet of the present invention, additives adversely affecting transparency among these additives are mainly used for filling not the surface layer but the substrate.

Examples of the nucleating agent used in the present invention include polymers having a high melting point, organic polycarboxylic acids and metal salts thereof, salts of aromatic sulfonic acids and metal salts thereof, organic phosphorus compounds and metal salts thereof, dibenzylidenesobitol and derivatives thereof, partial metal salts of rosin acid, inorganic fine particles, imides, amides, quinacridones, quinones and mixtures of these substances.

Examples of the polymer having a high melting point include polyolefins such as polyethylene and polypropylene, polyvinylcycloalkanes such as polyvinylcyclohexane and polyvinylcyclopentane, syndiotactic polystyrene, poly-3-methylpentene-1, poly-3-methylbutene-1 and polyalkenylsilanes.

Examples of the metal salt include aluminum benzoate, aluminum p-t-butyl benzoate, sodium adipate, sodium thiophenecarboxylate and sodium pyrrolcarboxylate.

Examples of the dibenzylidenesorbitol and the derivative thereof include dibenzylidenesorbitol, 1,3:2,4-bis(o-3,4-dimethylbenzylidene)-sorbitol, 1,3:2,4-bis(o-2,4-dimethylbenzylidene)sorbitol, 1,3:2,4-bis(o-4-ethylbenzylidene) sorbitol, 1,3:2,4-bis(o-4-chlorobenzylidene)sorbitol and 1,3:2,4-dibenzylidenesorbittol. Specific examples of the dibenzylidenesorbitol include commercial products such as GELALL MD and GELALL MD-R (trade names) manufactured by New Japan Chemical Co., Ltd.

Examples of the partial metal salt of rosin acid include PINE CRYSTAL KM1600, PINE CRYSTAL KM-1500 and PINE CRYSTAL KM-1300 (trade names) manufactured by ARAKAWA CHEMICAL INDUSTRIES. LTD.

Examples of the inorganic fine particles include talc, clay, mica, asbestos, glass fibers, glass flakes, glass beads, calcium silicate, montmorillonite, bentonite, graphite, aluminum powder, alumina, silica, diatomaceous earth, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite and molybdenum sulfide.

Examples of the amide compound include adipic acid dianilide and suberic acid dianilide.

The nucleating agent may be used singly or in combination of two or more.

In the propylene-based resin composition used in the present invention, it is preferable that metal salts of organic phosphoric acids represented by the following general formula:

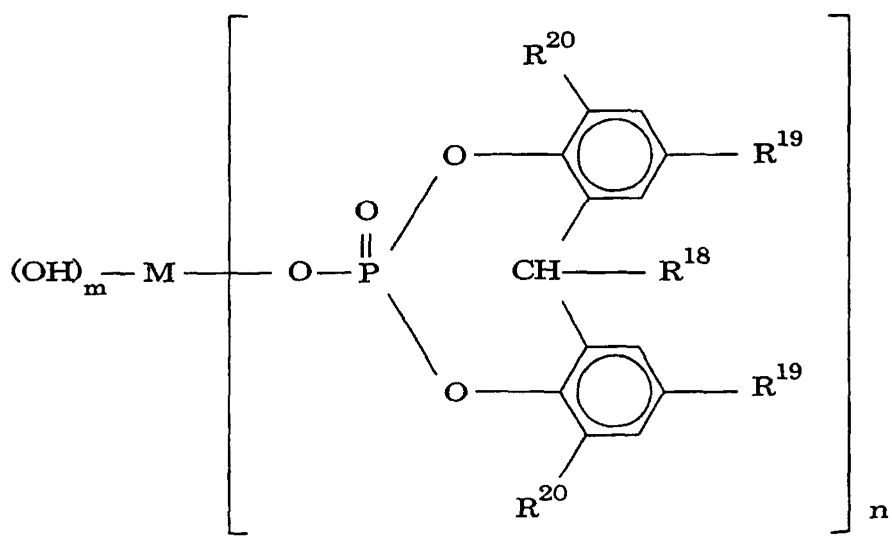

and/or inorganic fine particles such as talc are used as the nucleating agent since little smell is emitted. This propylene-based resin composition can be advantageously used for application to food products. In the above general formula, $R^{18}$ represents hydrogen atom or an alkyl group having 1 to 4 carbon atoms; $R^{19}$ and $R^{20}$ each represent hydrogen

atom, an alkyl group having 1 to 12 carbon atoms, a cycloalkyl group, an aryl group or an aralkyl group; M represents a metal selected from alkali metals, alkaline earth metals, aluminum and zinc; when M represents an alkali metal, m represent 0 and n represent 1; when M represents an alkaline earth metal or zinc, n represents 1 or 2, m represents 1 when n represents 1 and 0 when n represents 2; and when M represents aluminum, m represents 1 and n represents 2.

Examples of the metal salt of an organic phosphorus acid include Adekastab NA-11 and Adekastab NA-21 (manufactured by Asahi Denka Kogyo K.K.).

In the resin composition used in the present invention, it is preferable that the inorganic fine particles described above such as talc is used as the nucleating agent since the obtained film exhibits excellent slipping property and other improved properties such as the printing property. It is also preferable that dibenzylidenesorbitol or a derivative thereof described above is used as the nucleating agent since the obtained film exhibits excellent transparency. It is also preferable that the amide compound described above is used as the nucleating agent since the obtained film exhibits excellent rigidity.

The resin composition used in the present invention exhibits the excellent molding property, little stickiness and excellent flexibility and transparency.

For forming the surface-protecting film-sheet of the present invention, it is advantageous that the resin composition described above is molded into a film or a sheet having a thickness of about 0.01 to 0.5 mm in accordance with a molding process such as the extrusion molding, the cast molding, the inflation molding, the calender molding and the injection molding.

For forming the film or the sheet used as the surface layer and/or the substrate in the decorative film of the present invention, it is advantageous that the resin composition described above is molded into a film or a sheet having a thickness of about 0.03 to 0.5 mm in accordance with a molding process such as the cast molding, the inflation molding and the calender molding.

It is preferable that the film and the sheet obtained as described above is subjected to a surface treatment such as the corona treatment, the ozone treatment and the plasma treatment so that the adhesive property and the printing property are improved. The film and the sheet may be provided with the shielding effect by adding a pigment during the molding when the film and the sheet is used as the substrate.

The surface-protecting film-sheet of the present invention has the self-adhesive property and, essentially, no adhesive layer is required for attaching the film-sheet to a plate of a synthetic resin or the like. However, an adhesive layer may be formed on one face of the film or the sheet, where necessary. The use of the adhesive layer is suitably decided depending on the application of the material obtained by attaching the adhesive layer or on the material to which the adhesive layer is attached. In other words, the use of the adhesive layer and the type of the adhesive layer are decided depending on the strength required for the attachment which may be different between the use as the simple surface protection and the application requiring the secondary working. The adhesive used for forming the adhesive layer is not particularly limited. Examples of the adhesive include conventional adhesives such as acrylic resins, styrene-isobutylene-styrene copolymers, styrene-butylene-styrene copolymers, styrene-ethylene-butylene-styrene copolymers, polyisobutylene-based resins, natural rubber-based resins, styrene-butadiene copolymers and styrene-isoprene copolymers.

The process for forming the adhesive layer is not particularly limited. Examples of the process for forming the adhesive layer include

(1) a process in which a film or a sheet is coated with a solution prepared by dissolving the adhesive in a suitable solvent or a dispersion prepared by dispersing the adhesive in water, and the formed coating layer is dried;
(2) a process in which a film is coated with the melted adhesive; and (3) a process in which the material for molding and the adhesive are coextruded during the preparation of the film-sheet. The process can be suitably selected in accordance with the type of the used adhesive. The thickness of the adhesive layer thus formed is, in general, in the range of 1 to 100 μm and preferably in the range of 3 to 50 μm.

In the present invention, when the adhesive layer is formed, it is advantageous that the surface of the film or the sheet is subjected to the corona treatment, the ozone treatment or the plasma treatment so that the wetting index (as measured in accordance with Japanese Industrial Standard K6768) of the surface is in the range of 350 to 500 μN/cm.

In the present invention, a layer of a releasing film may be formed on the adhesive layer, where desired. Examples of the releasing film include paper provided with the releasing property using Teflon, a polyester, polypropylene, polyethylene, a silicone-based resin or a nonionic surfactant.

The decorative film-sheet of the present invention may be a film-sheet having a laminate structure comprising the surface layer, the adhesive layer, the picture layer, the adhesive layer and the substrate, i.e., a so-called doubling film, or a film-sheet having a laminate structure comprising the surface layer, the adhesive layer and the picture layer, i.e., a so-called back print film (a film having the printing directly on the surface layer and having no substrate).

Examples of the adhesive layer in the decorative film-sheet include layers comprising a conventional adhesive, such as a polyurethane-based resin, an epoxy-based resin, an acrylic resin, a vinyl-based resin, a vinyl acetate-based resin, a polyester-based resin, an ethylene-vinyl acetate copolymer resin, an acrylic compound-vinyl acetate copolymer resin, a polyamide-based resin or an ionomer-based resin, as the main component or a modified polyolefin and having a thickness of about 1 to 20 μm. Examples of the modified polyolefin include products obtained by chemical modification of polyolefins, such as polyethylene, polypropylene, ethylene-α-olefin copolymers, ethylene-α-olefin-non-conjugated diene compound copolymer rubbers (for example, EPDM) and ethylene-aromatic monovinyl compound-conjugated diene compound copolymer rubbers, with unsaturated carboxylic acids such as acrylic acid, methacrylic acid and maleic acid, anhydrides of unsaturated carboxylic acids such as maleic anhydride, esters of unsaturated carboxylic acids such as methyl acrylate and monomethyl maleate, amides of unsaturated carboxylic acids such as acrylamide and maleic acid monoamide and imides of unsaturated carboxylic acids such as maleimide and N-butylmaleimide.

The form of the adhesive in the working is not particularly limited and any of the adhesives of the liquid form, the semi-liquid form and the film-sheet form may be used. When the adhesive layer has two layers, the adhesive in the first adhesive layer and the adhesive in the second adhesive layer may be formed with the same material or different materials.

The picture layer is provided with a printing expressing, for example, a wood pattern, a stone pattern, a surface pattern of natural leather, a cloth pattern or an abstract pattern. The binder of the ink for forming the picture pattern is not particularly limited and a suitable binder can be selected from polyurethane-based resins, vinyl chloride-based resins, vinyl chloride-vinyl acetate-based copolymer resins, vinyl chloride-vinyl acetate-based copolymer resins/acrylic resins, chlorinated polypropylene-based resins, acrylic resins, polyester-based resins, polyamide-based resins, butyral-based resins, polystyrene-based resins, nitrocellulose-based resins and acetylcellulose-based resins. The ink suitably comprises coloring agents such as pigments and dyes, fillers and solvents. The thickness of the picture pattern layer is, in general, in the range of about 1 to 5 μm.

In the present invention, as the picture layer described above, a layer having a two layer structure comprising a picture pattern layer and a shielding layer is preferable. As the ink used for forming the shielding layer, an ink prepared by suitably mixing coloring agents such as pigments and dyes, fillers, solvents, stabilizers, plasticizers, catalysts and curing agents in a binder is used. Examples of the binder include the same substances as those described as the examples of the binder for the ink used for forming the picture pattern layer. As the shielding layer, a solid printing layer having a thickness of about 1 to 20 μm is preferable. The shielding layer is formed as a layer disposed under the picture pattern layer.

In the decorative film-sheet of the present invention, where desired, a top coat layer comprising an acrylic resin or a polyurethane resin and having a thickness of about 1 to 20 μm may be formed on the surface layer so that wear resistance, weatherability, workability for embossing, scratch resistance and resistance to staining are improved. The surface layer may be subjected to embossing. Depressions on the surface layer may be filled with a wiping ink.

The process for producing the decorative film-sheet of the present invention is not particularly limited as long as the film-sheet having the laminate structure described above can be obtained. For example, it is advantageous that the film-sheet having the laminate structure comprising the surface layer, the adhesive layer, the picture layer, the adhesive layer and the substrate is prepared in accordance with one of the following two processes.

In a first process, the adhesive layer, the picture layer and the adhesive layer are successively laminated on the substrate in accordance with a conventional printing process such as the gravure printing, the screen printing, the offset printing and the flexo printing. Thereafter, (1) the film or the sheet for the surface layer is laminated on the adhesive layer in accordance with the heat lamination; (2) the film or the sheet for the surface layer is laminated on the adhesive layer in accordance with the dry lamination or the wet lamination; (3) after an adhesive layer having the same composition is formed on the film or the sheet for the surface layer in accordance with a conventional printing process such as the gravure printing, the screen printing, the offset printing and the flexo printing or in accordance with a coating process such as the roll coating, the formed laminate is laminated to the above laminate in accordance with the heat lamination in a manner such that the adhesive layers are attached together; or (4) the surface layer is formed by the extrusion lamination of the resin for the surface layer.

In a second process, the adhesive layer and the picture layer are successively laminated on the substrate in accordance with a conventional printing process such as the gravure printing, the screen printing, the offset printing and the flexo printing. Thereafter, (1) an adhesive layer is formed on the film or the sheet for the surface layer in accordance with a conventional printing process such as the gravure printing, the screen printing, the offset printing and the flexo printing or in accordance with a coating process such as the roll coating and the formed laminate is laminated to the above laminate in accordance with the heat lamination in a manner such that the formed adhesive layer is attached to the picture layer; (2) an adhesive layer is formed on the film or the sheet for the surface layer in accordance with the same procedures as those in (1) and the formed laminate is laminated to the above laminate in accordance with the dry lamination or the wet lamination; (3) the resin for the adhesive layer is extruded between the films or the sheets for the picture layer and the surface layer in the melted condition and the layers are laminated

together (the extrusion lamination); or (4) the adhesive layer and the surface layer are formed by coextrusion direct lamination of the resin for the adhesive layer and the resin for the surface layer.

The present invention also provides decorative materials prepared by attaching the decorative film-sheet obtained as described above to various substrates.

Examples of the substrate used as the substrate of the decorative material include wood substrates such as wood, plywood, laminated wood, particle boards and hard boards, metal substrates such as steel plates, stainless steel plates and aluminum plates and inorganic substrates such as gypsum boards.

The decorative material can be produced by laminating the decorative film-sheet to the above substrate using an adhesive in a manner such that the substrate or the picture layer of the decorative film-sheet faces the above substrate. The adhesive used in the above lamination is not particularly limited and can be suitably selected from conventional adhesives.

The present invention will be described more specifically with reference to examples in the following. However, the present invention is not limited to the examples.

Example 1

(1) Preparation of pellets of propylene polymer (A)

(i) Synthesis of a complex

Synthesis of (1,2'-dimethylsilylene)(2,1'-dimethylsilylene)-bis(3-trimethylsilylmethylindenyl)zirconium dichloride

In a Schlenk bottle, 3.0 g (6.97 mmoles) of lithium salt of (1,2'-dimethylsilylene)(2,1'-dimethylsilylene)bis(indene) was dissolved into 50 ml of THF and the resultant solution was cooled at -78°C. Into the cooled solution, 2.1 ml (14.2 mmoles) of iodomethyltrimethylsilane was slowly added dropwise and the resultant mixture was stirred at the room temperature for 12 hours. The solvent was removed by distillation and 50 ml of ether was added. The obtained solution was washed with a saturated solution of ammonium chloride. After separation of liquid phases, the organic layer was dried. The solvent was removed and 3.04 g (5.88 mmoles) of (1,2'-dimethylsilylene)(2,1'-dimethylsilylene) bis(3-trimethylsilylmethylindene) was obtained (the yield: 84%).

Into a Schlenk bottle, 3.04 g (5.88 mmoles) of (1,2'-dimethylsilylene)(2,1'-dimethylsilylene)bis(3-trimethylsilylmethylindene) obtained above and 50 ml of ether were placed under a stream of nitrogen and cooled at -78°C. After 7.6 ml (11.7 mmoles) of n-BuLi (a hexane solution, 1.54 M) was added, the resultant mixture was stirred at the room temperature for 12 hours. The solvent was removed by distillation and the obtained solid was washed with 40 ml of hexane. Thus, 3.06 g (5.07 mmoles) of the lithium salt was obtained as the etherate (the yield: 73%).

The result of the measurement of $^1$H-NMR (90 MHz, THF-$d_8$) was as follows: $\delta$ 0.04 (s, 18H, trimethylsilyl), 0.48 (s, 12H. dimethylsilylene), 1.10 (t, 6H, methyl), 2.59 (s, 4H, methylene), 3.38 (q, 4H, methylene) and 6.2 to 7.7 (m, 8H, Ar-H).

The lithium salt obtained above was dissolved into 50 ml of toluene under a stream of nitrogen. The resultant solution was cooled at -78°C and a suspension of 1.2 g (5.1 mmoles) of zirconium tetrachloride in toluene (20 ml) which had been cooled at -78°C in advance was added dropwise. After the addition was completed, the resultant mixture was stirred at the room temperature for 6 hours. The solvent was removed from the reaction solution by distillation. The obtained residue was recrystallized from dichloromethane and 0.9 g (1.33 mmoles) of (1,2'-dimethylsilylene)(2,1'-dimethylsilylene)bis(3-trimethylsilylmethylindenyl) zirconium dichloride was obtained (the yield: 26%).

The result of the measurement of $^1$H-NMR (90 MHz, $CDCl_3$) was as follows: $\delta$ 0.0 (s, 18H, trimethylsilyl), 1.02, 1.12 (s, 12H. dimethylsilylene), 2.51 (dd, 4H, methylene) and 7.1 to 7.6 (m, 8H, Ar-H).

(ii) Polymerization of propylene

Into a stainless steel autoclave having an inner volume of 10 liters and equipped with a stirrer, 4 liters of n-heptane, 2 mmoles of triisobutylaluminum, 2 mmoles of methylaluminoxane (manufactured by ALBEMARLE CORPORATION) and 2 micromoles of (1,2'-dimethylsilylene)(2,1'-dimethylsilylene)bis(3-trimethylsilylmethylindenyl) zirconium dichloride obtained above were successively placed. After hydrogen was introduced to a pressure of 0.06 MPa (gauge), propylene was introduced in an amount such that the total pressure was raised to 0.8 MPa (gauge) while the temperature was elevated to 60°C. The supply of propylene was continued through a pressure regulator in a manner such that the total pressure was adjusted at 0.8 MPa during the polymerization. After the polymerization was allowed to proceed at 60°C for 30 minutes, the content was taken out and dried under a reduced pressure and a propylene polymer was obtained.

(iii) Granulation

Additives were added to the obtained propylene polymer in accordance with the following recipe. The obtained composition was extruded and granulated by a single screw extruder (manufactured by Tsukada Juki Seisakusho Co., Ltd.; TLC 35-20 type) and pellets of propylene polymer (A) was prepared. The obtained pellets of propylene polymer (A) was evaluated in accordance with the "Evaluation of the properties of a propylene polymer" shown in the following.

(Recipe of additives)

Phenol-based antioxidant: manufactured by Ciba Specialty Chemicals Corp.; Irganox 1010; 500 ppm

Phosphorus-based antioxidant: manufactured by Ciba Specialty Chemicals Corp.; Irganox 168; 1,000 ppm

(2) Evaluation of the properties of a propylene polymer

(i) Measurement of [η]

[η] was measured in tetraline as the solvent at 135°C using an automatic viscometer of the VR-053 type manufactured by Rigosha Co., Ltd.

(ii) Measurement of the pentad fraction

The pentad fraction was measured in accordance with the method described above.

(iii) Measurement of the melt flow rate (MFR)

MFR was measured at 230°C under a load of 21.18 N in accordance with the method of Japanese Industrial Standard K 7210.

(iv) Measurement of the molecular weight distribution (Mw/Mn)

Mw/Mn was measured using the apparatus shown in the following:

GPC apparatus

Column: TOSO GMHHR-H(S)HT
Detector: an RI detector for the liquid chromatogram; WATERS 150C

Conditions of the measurement

Solvent: 1,2,4-trichlorobenzene
Temperature of the measurement: 145°C
Flow rate: 1.0 ml/minute
Concentration of the sample: 2.2 mg/ml
Amount of injection: 160 microliters
Calibration curve: Universal Calibration
Program for the analysis: HT-GPC (ver. 1.0)

(v) Measurement of DSC

Using a differential scanning calorimeter (manufactured by PerkinElmer Inc.; DSC-7), 10 mg of a sample was melted at 230°C for 3 minutes under the atmosphere of nitrogen. Then, the temperature was lowered to 0°C at a rate of 1°C/minute, held at 0°C for 3 minutes and elevated at a rate of 10°C/minute. The amount of the absorbed heat of fusion during the above procedure was used as ΔH. The temperature at the peak top of the greatest peak of the

endothermic curve of melting obtained during the above procedure was used as Tm. The temperature was held at 230°C for 3 minutes and then lowered to 0°C at a rate of 10°C/minute. The temperature at the peak top of the greatest peak of the exothermic curve of crystallization was used as Tc.

(vi) Fractionation chromatography under elevation of the temperature

The amount of the component which was not adsorbed with the filler at the temperature of the TREF column of 25°C, W25 (% by mass), in the elution curve was obtained as follows:

(a) Procedures of the operation

A sample solution was introduced into the TREF column adjusted at the temperature of 135°C. The temperature was slowly lowered to 0°C at a rate of 5°C/hour and held at 0°C for 30 minutes so that the sample was adsorbed with the filler. The temperature was elevated at a rate of 40°C/hour until the temperature of the column reached 135°C and an elution curve was obtained.

(b) Construction of the apparatus

TREF column: manufactured by GL Science Inc.; silica gel column (4.6ϕ×150 mm)
Flow cell: manufactured by GL Science Inc.; the length of light pass: 1 mm; KBr cell
Liquid transfer pump: manufactured by Senshu Science Comany, Ltd.; SSC-3100 pump
Valve oven: manufactured by GL Science Inc.; Model 554 oven (the high temperature type)
TREF oven: manufactured by GL Science Inc.
Two-series temperature controller: manufactured by Rigaku Kogyou Company; REX-C100 temperature controller
Detector: Infrared detector for liquid chromatography; manufactured by FOXBORO Co.; MIRAN 1A CVF
10-Way valve manufactured by VALCO Company; an electric valve
Loop: manufactured by VALCO Company; 500 microliter loop

(c) Conditions of the measurement

Solvent: o-dichlorobenzene
Concentration of the sample: 7.5 g/liter
Amount of injection: 500 microliters
Flow rate of the pump: 2.0 microliters/minute
Wave number of detection: 3.41 μm
Filler of the column: CHROMOSORB P (30 to 60 mesh)
Temperature distribution in the column: ±0.2°C or smaller

Table 1

| Properties of resin | Pellets (A) |
|---|---|
| [η] (dl/g) | 1.5 |
| mmmm | 0.45 |
| rrrr | 0.024 |
| rrrr/(1-mmmm) | 0.04 |
| W25 (% by mass) | 91 |
| MFR (g/10 minutes) | 6 |
| Mw/Mn | 2.0 |
| ΔH (J/g) | 25 |
| Tm (°C) | 81 |
| Tc (°C) | 42 |

(3) Preparation of a surface-protecting film

Pellets of propylene polymer (A) obtained in (1) in the above in an amount of 50% by mass and 50% by mass of polypropylene [manufactured by Idemitsu Petrochemical Co., Ltd.; F-704NP] were mixed together and the obtained mixture was molded into a film having a thickness of 100 μm by a cast molding machine of 90 mmϕ under the condition of a temperature of the resin of 250°C and a drawing speed of 10 m/minute. A grain pattern was formed on one face of the film at the time of the molding. Both faces were treated by the corona discharge under the condition of 5.0 kW. The wetting index of the surface treated by the corona discharge was 500 μN/cm (as measured in accordance with the method of Japanese Industrial Standard K6768).

The smooth face of the above film treated with the corona discharge was coated with an acrylic adhesive to form an adhesive layer having a thickness of 5 μm and a surface-protecting film was prepared. The surface-protecting film exhibited excellent workability in bending. Bending could be achieved without fracture of the film, scratch formation of the aluminum plate or cleavage of the film. The properties of the surface-protecting film were evaluated in accordance with the "Evaluation of a surface-protecting film" shown in the following. The results are shown in Table 2.

(4) Evaluation of a surface-protecting film

(i) Surface hardness

The surface hardness was obtained in accordance with "the test method of the Durometer hardness of plastics" of Japanese Industrial Standard K7215. The greater the surface hardness, the more excellent the effect of protecting the surface (the scratch resistance). It is preferable that the surface hardness is 50 or greater.

(ii) Tensile properties

The tensile modulus, the tensile elongation at break and the ratio of the modulus at 100% elongation / the modulus at 10% elongation were obtained at a temperature of the measurement of 23°C in accordance with "the method of the tensile test of a film and a sheet of plastics" of Japanese Industrial Standard K7127.

(a) Tensile modulus: The smaller the tensile modulus, the more flexible the film and the more excellent the workability in bending and the shape-following property of the film during drawing.
(b) The tensile elongation at break: The greater the tensile elongation at break, the less the fracture of the film in bending and in drawing.
(c) The ratio of the modulus at 100% elongation / the modulus at 10% elongation: The greater the ratio, the greater the modulus after working and the greater the possibility of fracture of the film due to the hardening.

(iii) Stress relaxation and residual stress

The stress relaxation and the residual stress were obtained in accordance with "the method of the tensile test of a film and a sheet of plastics" of Japanese Industrial Standard K7127.

(a) 10% Stress relaxation: The 10% stress relaxation is the fraction of the decrease in the residual stress when 10 minutes has passed after elongation of 10% at the room temperature. The greater the 10% stress relaxation, the smaller the cleavage of the film with time after bending and drawing. It is preferable that the 10% stress relaxation is 55% or greater.
(b) Residual stress at 100% elongation: The residual stress at 100% elongation is the residual stress when 10 minutes has passed after elongation of 100% at the room temperature. The smaller the residual stress at 100% elongation, the smaller the cleavage of the film. It is preferable that the residual stress at 100% elongation is 4 MPa or smaller.

(vi) Workability in bending

A film was placed on an aluminum plate having a thickness of 3 mm and the film was attached to the aluminum plate by passing through pressing rolls. The obtained laminate was bent in an obtuse angle and an acute angle and evaluated with respect to the cleavage of the film and the formation of scratches on the aluminum plate in accordance with the following criterion:

good: good

fair: poorer than good but allowable
poor: poor

(v) Scratch resistance

The scratch resistance is expressed by the pencil scratch value measured in accordance with "the general test method of coating materials" of Japanese Industrial Standard K5400. The formation of scratches was examined by a pencil having the hardness of 2B. The scratch resistance was evaluated in accordance with the following criterion:

good: no scratches
fair: poorer than good but allowable
poor: scratches formed

Example 2

A surface-protecting film was prepared and evaluated in accordance with the same procedures as those conducted in Example 1 except that 30% by mass of pellets (A) and 70% by mass of polypropylene F-704NP were used. The obtained surface-protecting film exhibited excellent workability in bending and the bending could be achieved without fracture of the film, formation of scratches on the aluminum plate or cleavage of the film. The results of the evaluation of the surface-protecting film are shown in Table 2.

Example 3

A surface-protecting film was prepared and evaluated in accordance with the same procedures as those conducted in Example 1 except that 70% by mass of pellets (A) and 30% by mass of polypropylene F-704NP were used. The obtained surface-protecting film exhibited excellent workability in bending and the bending could be achieved without fracture of the film, formation of scratches on the aluminum plate or cleavage of the film. The results of the evaluation of the surface-protecting film are shown in Table 2.

Example 4

The film before the formation of the adhesive layer in Example 1 was pressed to a polycarbonate plate having a thickness of 3 mm and a polycarbonate plate protected with the film could be prepared without using an adhesive layer.

Comparative Example 1

The properties of a widely used surface-protective film (the thickness: 80 μm) made of a flexible polyvinyl chloride-based resin were evaluated. The results are shown in Table 2.

Table 2

| Example | 1 | 2 | 3 | |
|---|---|---|---|---|
| Comparative Example | | | | 1 |
| Tensile modulus (MPa) | 275/280 | 540/560 | 130/130 | 104 |
| Tensile elongation at break (%) | 490/570 | 420/480 | 620/670 | 370/490 |
| Ratio of 100% modulus/ 10% modulus | 1.20/1.25 | 1.35/1.45 | 1.10/1.15 | 1.86 |
| 10% Stress relaxation (%) | 78 | 68 | 80 | 77 |
| Residual stress after 100% elongation (MPa) | 2.5 | 3.0 | 2.0 | 3.3 |
| Surface hardness (D scale) | 58 | 60 | 50 | 55 |

Table 2 (continued)

| Example | 1 | 2 | 3 | |
|---|---|---|---|---|
| Comparative Example | | | | 1 |
| Workability in bending | | | | |
| fracture of film | good | good | good | fair |
| cleavage of film | good | good | good | fair |
| scratches on adherent | good | good | good | fair |
| Scratch resistance | good | good | fair | poor |

Notes:

In the tensile modulus, the tensile elongation at break and the ratio of 100% modulus/10% modulus, when two values (D1/D2) are shown, one value (D1) shows the value in the machine direction (MD) and the other value (D2) shows the value in the transverse direction (TD) and, when a single value is shown, the value shows the average value.

Example 5

(1) Formation of a surface layer film

Pellets of propylene polymer (A) obtained in Example 1 (1) in an amount of 50% by mass and 50% by mass of polypropylene [manufactured by Idemitsu Petrochemical Co., Ltd.; F-704NP] were mixed together and the obtained mixture was molded into a film having a thickness of 100 μm using a cast molding machine of 90 mmϕ under the condition of a temperature of the resin of 250°C and a drawing speed of 10 m/minute. A grain pattern was formed on one face of the film at the time of the molding. Both faces were treated by the corona discharge under the condition of 5.0 kW. The wetting index of the surface treated by the corona discharge was 500 μN/cm (as measured in accordance with the method of Japanese Industrial Standard K 6768).

(2) Lamination of an adhesive layer

On the smooth face of the film obtained in (1) in the above, an adhesive layer having a thickness of 3 μm was formed in accordance with the gravure printing using a primer containing a vinyl chloride-vinyl acetate copolymer resin as the main component.

(3) Preparation of a printed film (a picture layer)

On a colored film of high density polyethylene having a thickness of 90 μm, a primer containing a vinyl chloride-vinyl acetate copolymer resin as the main component and an ink containing a vinyl chloride-vinyl acetate copolymer resin as the binder were successively laminated. A primer containing a vinyl chloride-vinyl acetate copolymer resin as the main component was further laminated to the obtained film and a printed film was prepared. The total thickness of the printed film was 100 μm.

(4) Lamination of the surface layer film and the printed film

The adhesive layer of the surface layer film obtained in (2) and the adhesive layer of the printed film obtained in (3) were attached and adhered to each other by passing through rolls heated at 120°C. Thus, a decorative sheet was obtained.

(5) Adhesion to a plywood board and evaluation of secondary workability

In the decorative film obtained in (4) in the above, the surface layer was remarkably transparent and the picture layer was provided with a depth of a feeling of a high grade. The decorative film was more flexible than conventional decorative films of polyvinyl chloride films.

Using an adhesive containing an ethylene-vinyl acetate copolymer resin as the main component, the above

decorative film was laminated to a medium density particle board having portions of rough surfaces in a manner such that the colored layer of high density polyethylene was attached to the particle board. The decorative film was laminated also to a board in the shape of a flat plate in the same manner. The obtained laminates were subjected to working by V-cutting. No cracks or whitening were found at the folded portions and the workability in lapping and V-cutting was excellent.

Example 6

(1) Lamination by coextrusion direct lamination

A composition comprising pellets of propylene polymer (A) obtained in Example 1 (1) in an amount of 50% by mass and 50% by mass of polypropylene [manufactured by Idemitsu Petrochemical Co., Ltd.; F-704NP] and an adhesive resin obtained by mixing 40% by mass of pellets of propylene polymer (A), 40% by mass of polypropylene F-704NP and 20% by mass of a polyolefin modified with maleic anhydride [manufactured by Idemitsu Petrochemical Co., Ltd.; POLYTACK E-100] were coextruded. After the obtained laminate was treated with ozone, the treated laminate was laminated with the printed film obtained in Example 5 (3) and a decorative film was obtained. The temperature of the melted resin during the coextrusion was 290°C and the thickness of the obtained decorative film was 160 μm.

(2) Adhesion to a plywood board and evaluation of secondary workability

In the decorative film obtained in (1) in the above, the surface layer was remarkably transparent and the picture layer was provided with a depth of a feeling of a high grade. The decorative film was more flexible than conventional decorative films of polyvinyl chloride films.

Using an adhesive containing an ethylene-vinyl acetate copolymer resin as the main component, the above decorative film was laminated to a medium density particle board having portions of rough surfaces in a manner such that the colored layer of high density polyethylene was attached to the particle board. The decorative film was also laminated to a board in the shape of a flat plate in the same manner. The obtained laminates were subjected to working by V-cutting. No cracks or whitening were found at the folded portions and the workability in lapping and V-cutting was excellent.

Example 7

(1) Preparation of a back print film

The film obtained in Example 5 (1) was used as the surface layer. Using a primer containing a vinyl chloride-vinyl acetate copolymer resin as the main component and an ink containing a vinyl chloride-vinyl acetate copolymer resin as the binder, the adhesive layer and the picture layer were successively laminated to the smooth face of the surface layer in accordance with the gravure printing. Using a composition obtained by mixing a pigment to the ink, a solid layer was laminated to the laminate obtained above in accordance with the gravure printing and a decorative film was prepared.

(2) Adhesion to a plywood board and evaluation of secondary workability

In the decorative film obtained in (1) in the above, the surface layer was remarkably transparent and the picture layer was provided with a depth of a feeling of a high grade. The decorative film was more flexible than conventional decorative films of polyvinyl chloride films.

Using an adhesive containing an ethylene-vinyl acetate copolymer resin as the main component, the above decorative film was laminated to a medium density particle board having portions of rough surfaces in a manner such that the solid layer was attached to the particle board. The decorative film was also laminated to a board in the shape of a flat plate in the same manner. The obtained laminates were subjected to working by V-cutting. No cracks or whitening were found at the folded portions and the workability in lapping and V-cutting was excellent.

Example 8

A decorative film was prepared and laminated to a plywood board and the secondary workability was evaluated in accordance with the same procedures as those conducted in Example 5 except that 70% by weight of pellets (A) and 30% by mass of polypropylene F-704NP were used. In the decorative film obtained above, the surface layer was remarkably transparent and the picture layer was provided with a depth of a feeling of a high grade. The decorative

film was more flexible than conventional decorative films of polyvinyl chloride films. No cracks or whitening were found at the folded portions and the workability in lapping and V-cutting was excellent.

Example 9

A decorative film was prepared and laminated to a plywood board and the secondary workability was evaluated in accordance with the same procedures as those conducted in Example 5 except that 30% by weight of pellets (A) and 70% by mass of polypropylene F-704NP were used. In the decorative film obtained above, the surface layer was very transparent and the picture layer was provided with a depth. The decorative film had the same flexibility as that of conventional decorative films of polyvinyl chloride films. No cracks or whitening were found at the folded portions and the workability in lapping and V-cutting was excellent.

Comparative Example 2

(1) Formation of a surface layer film

A polypropylene resin [manufactured by Sumitomo Chemical Co., Ltd.; Noblen FL6315G; the peak temperature of melting (Tm): 140°C] in an amount of 90% by mass and 10% by mass of a thermoplastic elastomer [manufactured by KURARAY CO., LTD.; HYBRAR HVS-3] were dry blended and the obtained mixture was molded into a film having a thickness of 80 μm using a cast molding machine of 40 mmϕ under the condition of a temperature of the resin of 230°C and a drawing speed of 5 m/minute. A grain pattern was formed on one face of the film. Both faces of the obtained film were treated by the corona discharge (4.5 kW). The wetting index of the surface treated by the corona discharge was 490 μN/cm.

(2) Lamination of an adhesive layer

On the smooth face of the film obtained in (1) in the above, an adhesive layer having a thickness of 3 μm was formed in accordance with the gravure printing using a primer containing a vinyl chloride-vinyl acetate copolymer resin as the main component.

(3) Preparation of a printed film (a picture layer)

On a colored film of high density polyethylene having a thickness of 90 μm, a primer containing a vinyl chloride-vinyl acetate copolymer resin as the main component and an ink containing a vinyl chloride-vinyl acetate copolymer resin as the binder were successively laminated. A primer containing a vinyl chloride-vinyl acetate copolymer resin as the main component was further laminated to the obtained film and a printed film was prepared. The total thickness of the printed film was 100 μm.

(4) Lamination of the surface layer film and the printed film

The adhesive layer of the surface layer film obtained in (2) and the adhesive layer of the printed film obtained in (3) were attached and adhered to each other by passing through rolls heated at 120°C. Thus, a decorative sheet was obtained.

(5) Adhesion to a plywood board and evaluation of secondary workability

In the decorative film obtained in (4) in the above, the transparency of the surface layer was rather poor. The flexibility of the decorative film was about the same as that of conventional decorative films of polyvinyl chloride films.

Using an adhesive containing an ethylene-vinyl acetate copolymer resin as the main component, the above decorative film was laminated to a medium density particle board having portions of rough surfaces in a manner such that the colored layer of high density polyethylene was attached to the particle board. The decorative film was laminated to a board in the shape of a flat plate in the same manner. When the obtained laminates were subjected to working by lapping and V-cutting at a low temperature, whitening was found at the folded portions.

The results are shown together in Table 3

Table 3

| Example | 5 | 6 | 7 | 8 | 9 | |
|---|---|---|---|---|---|---|
| Comparative Example | | | | | | 2 |
| Transparency of surface<br>Workability in lapping<br>Workability in V-cutting | very good<br>very good<br>very good | very good<br>very good<br>very good | very good<br>very good<br>very good | very good<br>very good<br>very good | good<br>good<br>good | rather poor<br>whitening at low temp.<br>whitening at low temp. |

INDUSTRIAL APPLICABILITY

The surface-protecting film-sheet of the present invention has stress relaxation, flexibility and strength which are the same as or greater than those of conventional film-sheets made of flexible vinyl chloride-based resins and exhibits excellent shape-following property and excellent workability, a great surface hardness and an excellent wear resistance. Therefore, the surface-protecting film-sheet exhibits the excellent property for protection of the surface and causes no problems in disposal after the use since no toxic gases are generated during incineration. Moreover, it is not always necessary that an adhesive layer is formed since the film-sheet has the self-adhesive property. The surface-protecting film-sheet of the present invention can be used advantageously as the film-sheet replacing protective film-sheets made of flexible vinyl chloride resins which are widely used currently.

The decorative film-sheet of the present invention has the surface layer exhibiting excellent transparency, exhibits excellent workability in V-cutting and lapping and causes no problems in disposal since no toxic gases such as chlorine gas are generated during incineration. Therefore, the decorative film-sheet is remarkably valuable as a commercial product. The decorative film-sheet of the present invention can be used advantageously for members of furnitures, cabinets of televisions and refrigerators and interior materials of buildings.

**Claims**

**1.** A surface-protecting film-sheet which comprises at least one layer comprising a resin composition which comprises 1 to 99% by mass of propylene resin [I] satisfying following conditions (1) and (2):

(1) a fraction of a meso pentad (mmmm) is in a range of 0.2 to 0.6
(2) a fraction of a racemi pentad (rrrr) and a value of (1-mmmm) satisfy a relation:

$$[rrrr/(1-mmmm)] \leqq 0.1$$

and 99 to 1% by mass of olefin-based resin [II].

**2.** A surface-protecting film-sheet according to Claim 1, wherein propylene polymer [I] further satisfies following condition (3):
(3) an intrinsic viscosity [η] measured in tetraline at 135°C is in a range of 1.0 to 3.0 dl/g.

**3.** A surface-protecting film-sheet according to any one of Claims 1 and 2, wherein propylene polymer [I] further satisfies following condition (4):
(4) an amount of component (W25) which is eluted at a temperature of 25°C or lower in chromatography under elevation of temperature is 20 to 100% by mass.

**4.** A surface-protecting film-sheet according to any one of Claims 1 to 3, wherein propylene polymer [I] is obtained by polymerization of propylene in a presence of a metallocene catalyst comprising a transition metal compound having a bridged structure formed through two bridging groups and a cocatalyst.

**5.** A surface-protecting film-sheet according to any one of Claims 1 to 4, which comprises an adhesive layer on one face.

**6.** A decorative film-sheet having a laminate structure comprising a surface layer, an adhesive layer, a picture layer, an adhesive layer and a substrate or a laminate structure comprising a surface layer, an adhesive layer and a

picture layer, wherein a film or a sheet comprising a resin composition which comprises 1 to 99% by mass of propylene resin [I] satisfying following conditions (1) and (2):

(1) a fraction of a meso pentad (mmmm) is in a range of 0.2 to 0.6
(2) a fraction of a racemi pentad (rrrr) and a value of (1-mmmm) satisfy a relation:

$$[rrrr/(1-mmmm)] \leqq 0.1$$

and 99 to 1% by mass of olefin-based resin [II] is used for at least one of the surface layer and the substrate.

**7.** A decorative film-sheet according to Claim 6, wherein the surface layer is a film or a sheet comprising a resin composition which comprises propylene polymer [I] and olefin-based resin [II].

**8.** A decorative film-sheet according to any one of Claims 6 and 7, wherein propylene polymer [I] further satisfies following condition (3):
(3) an intrinsic viscosity [η] measured in tetraline at 135°C is in a range of 1.0 to 3.0 dl/g.

**9.** A decorative film-sheet according to any one of Claims 6 to 8, wherein propylene polymer [I] further satisfies following condition (4):
(4) an amount of a component (W25) which is eluted at a temperature of 25°C or lower in chromatography under elevation of temperature is in a range of 20 to 100% by mass.

**10.** A decorative film-sheet according to any one of Claims 6 to 9, wherein propylene polymer [I] is obtained by polymerization of propylene in a presence of a metallocene catalyst comprising a transition metal compound having a bridged structure through two bridging groups and a cocatalyst.

**11.** A decorative film-sheet according to any one of Claims 6 to 10, wherein the picture layer has a two-layer structure comprising a picture pattern layer and a shielding layer.

**12.** A decorative wood material which comprises a wood substrate and a decorative film-sheet described in any one of Claims 6 to 11 which is adhered to the wood substrate.

**13.** A decorative metal material which comprises a metal substrate and a decorative film-sheet described in any one of Claims 6 to 11 which is adhered to the metal substrate.

**14.** A decorative inorganic material which comprises an inorganic substrate and a decorative film-sheet described in any one of Claims 6 to 11 which is adhered to the inorganic substrate.

## INTERNATIONAL SEARCH REPORT

International application No.
PCT/JP01/09546

A. CLASSIFICATION OF SUBJECT MATTER
Int.Cl7 C08J5/18 C08F10/06 // C08L23:12

According to International Patent Classification (IPC) or to both national classification and IPC

B. FIELDS SEARCHED

Minimum documentation searched (classification system followed by classification symbols)
Int.Cl7 C08J5/18 C08F10/06 // C08L23:12

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-281723 A (Idemitsu Petrochem Co., Ltd.), 10 October, 2000 (10.10.2000), Claims; page 24, Par. No. [0097] & EP 1095951 A1 pages 30 to 31, Par. No. [0130]; page 143, Par. No. [0898] & WO 99/67303 A1 | 1-14 |
| Y | EP 927743 A1 (IDEMITSU PETROCHEMICAL CO., LTD.), 07 July, 1999 (07.07.1999), Claims; page 10, Par. No. [0073] to page 12, Par. No. [0090] & JP 10-101866 A page 12, Par. No. [0056] to page 13, Par. No. [0063] & US 6096814 A & KR 2000029834 A & WO 98/5714 A1 | 1-14 |
| Y | JP 2000-95879 A (Mitsubishi Plastics, Inc.), 04 April, 2000 (04.04.2000), Claims; page 2, Par. No. [0002] (Family: none) | 1-14 |
| Y | JP 2000-108265 A (TOPPAN PRINTING CO., LTD.), 18 April, 2000 (18.04.2000), | 1-14 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 January, 2002 (10.01.02) | 22 January, 2002 (22.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.
PCT/JP01/09546

C (Continuation). DOCUMENTS CONSIDERED TO BE RELEVANT

| Category* | Citation of document, with indication, where appropriate, of the relevant passages | Relevant to claim No. |
|---|---|---|
| | Claims; page 3, Par. No. [0017] (Family: none) | |
| A | JP 2000-44695 A (Mitsubishi Plastics, Inc.), 15 February, 2000 (15.02.2000), Claims & EP 1090947 A1 & WO 99/62987 A1 | 1-14 |

Form PCT/ISA/210 (continuation of second sheet) (July 1992)